# EUROPEAN PATENT SPECIFICATION

(11) **EP 2 859 128 B1**
(45) Date of publication and mention of the grant of the patent: **13.04.2016**
(21) Application number: 13721356.7
(22) Date of filing: 10.05.2013
(51) Int. Cl.: C22B 1/242, C22B 7/00, C22B 7/02

(54) **PROCESS FOR PRODUCING HARDENED GRANULES FROM IRON-CONTAINING PARTICLES**
VERFAHREN ZUR HERSTELLUNG GEHÄRTETER KÖRNER AUS EISENHALTIGEN PARTIKELN
PROCÉDÉ POUR LA PRODUCTION DE GRANULÉS DURCIS À PARTIR DE PARTICULES CONTENANT DU FER

(30) Priority: 06.06.2012 DE 102012011240
(43) Date of publication of application: 15.04.2015
(73) Proprietor: Outotec (Finland) Oy, 02230 Espoo (FI)
(72) Inventor: ORTH, Andreas, 61381 Friedrichsdorf (DE); SAATCI, Alpaydin, 60386 Frankfurt am Main (DE); SCHMIDBAUER, Erwin, 92280 Kastl (DE); KREMMER, Katharina, 60320 Frankfurt am Main (DE)
(74) Representative: Keil & Schaafhausen Patent- und Rechtsanwälte PartGmbB
(86) International application number: PCT/EP2013/059749
(87) International publication number: WO 2013/182377

(56) References cited:
- EP-A1- 0 916 742
- WO-A2-00/50649
- US-A- 5 695 543

## Description

The present invention relates to the production of hardened granules from iron-containing particles, wherein the particles are mixed with at least one binder and water or an aqueous base to obtain a mix, the mix is formed to granules, the granules are hardened, and the hardened granules are subjected to a reduction with a supplied reducing agent.

Iron-containing particles are obtained in a multitude of processes. On the one hand, they are obtained already when iron compounds must be separated for the further processing, as in iron-containing minerals the iron is not present in pure form. These minerals rather are mixtures with non-iron-containing rocks, the so-called gangue. For separating this gangue it is common practice to finely grind the raw material and liberate the iron compound from this pulverized mixture. There is obtained an iron ore concentrate which is present in particles with a diameter < 100 µm.

Before the actual metallization, this iron ore concentrate must be subjected to a further treatment, since the particle size of the concentrate with a diameter of < 100 µm is not suitable for known reduction processes of the iron and steel production. In shaft furnaces and rotary kilns, there can only be used particles with a diameter > 10 mm, whereas for fluidized-bed processes particle sizes of 60 µm to 1 mm are required. To increase the particle size, the fine iron-containing ore usually is pelletized or granulated.

In the reduction of iron-containing materials, for example by the Midrex, Circored, SL-RN and HISMELT processes, significant amounts of very fine-grained dusts with an approximate particle size of < 100 µm are obtained in addition. The iron content in these dusts partly is present in metallized form. So far, it has hardly been possible to recycle these dusts within the process, so that large amounts were disposed of on landfills. Apart from the outdated waste of raw material, there is also the risk of dust explosions. The book "Pelletieren von Eisenerzen", 1980, Meyer, Springer Verlag Berlin, Heidelberg and Verlag Stahleisen mbH, 1980, describes the possibility of using such dusts when pelletizing iron-containing ores. Just like the particles obtained from iron ore, the dusts must then also be processed to granules with larger diameters.

From WO 98/49352 A1 the granulation of fine-grained iron ore fractions is known, in which a binder material is used. A suitable binder material for example is bentonite, a rock which contains a mixture of various clay minerals, with montmorillonite being the most important constituent (60 to 80 wt-%).

US 6,024,790 describes that it may be expedient to activate this binder material bentonite for its intended uses by ion exchange with the intercalated cations. An activated bentonite generally has a better swelling capacity as well as a higher thermal stability. The activation process described in US 6,024,790 must be carried out over a period of several hours to a few days, in order to ensure a sufficient ion exchange.

From JP 63103851 it is known to add small amounts of sodium hydroxide to the bentonite and thus activate the clay material.

DE 25 175 43 discloses a process for agglomerating metallurgical dusts, in which the metallurgical dust is mixed with 2 to 20 wt-% of binder and about 0.5 to 5 wt-% of silicon-containing material, this mixture is formed to pellets or granules and subsequently hardened. It is also known to add further additives to the binder, such as sodium hydroxide, sodium carbonate and sodium bicarbonate in quantities of about 3 wt-%.

From EP 1 290 232 B1, there is known a process for producing metallized iron agglomerates from fine iron-containing particles by means of a binder, wherein cellulose fibers are used as binder. When forming the particles, the cellulose fibers act as binder, but due to their high carbon content they can also be used as reducing agent in the downstream reduction process.

EP 0 916 742 also discloses a process in which the reducing agent is already incorporated in the iron-containing granules. For this purpose, the iron-oxide-containing raw material is mixed with a carbonaceous material, an organic binder and an inorganic coagulating agent and subsequently mixed with water. Provided with a dispersing agent, the pellets thus obtained are dried and subsequently reduced. As dispersing agent, sodium hydroxide solution can also be used, for example.

WO 00/50 649 A2 discloses a method and apparatus for separating undesired toxic metals, such as zinc, lead and cadmium. Therefor, a mixture containing electric arc furnace (EAF) dusts or mill scale is sintered with carbonaceous particles to form sturdy sinter lumps. After preheating, said lumps are fed into a reduction reactor and the undesired toxic metals are volatilised by a hot reducing gas. The pellets (i.e. granules) produced by a pelletizer dish are sintered in a sinter plant, thereby destroying said pellets before feeding the sinter product to a reduction stage.

However, these processes known from the prior art involve a number of disadvantages. On the one hand, it is common practice to incorporate the reducing agent already in the granules or pellets produced. As a result, however, the reduction content already is predetermined when producing the pellets, as the same then depends on the ratio between iron and reducing agent in the respective pellet.

On the other hand, such processes involve the risk that the pellets greatly vary in their composition and thus an end product with different metallic iron content is obtained after the reduction.

Furthermore, it may happen that the embedded reduction material does not react completely in the reduced pellets, therefore still is present and has a disadvantageous effect during the further processing.

Those processes which omit the addition of the reducing agent have in common that for a sufficient hardness and strength of the pellets the binder must be activated. This activation, which for example can be effected with sodium hydroxide, generally is performed such that the binder first is brought in contact with the activating agent and the reactions taking place only are terminated after a period of at least a few hours.

However, when a non-activated binder such as bentonite is used, the quality of the granulate particles greatly depends on the composition of the iron-containing ore. A decomposition of the granulate particles on firing should, however, be avoided, since the particles otherwise again only have a size in which they are not suitable for the further processing.

Therefore, it is the object of the present invention to produce stable granules from iron-containing ores, without the reducing agent already being supplied to these granules.

This object is solved with the invention by a process with the features of claim 1. For this purpose, iron-containing particles are first mixed with a binder and subsequently with water or an aqueous base to obtain a mix. This mix subsequently is formed to granules (granulation) and these granules are hardened. The hardened granules either are reduced already during hardening or are subjected to a downstream reduction. In each aspect, the reduction is effected with a supplied reducing agent. It is decisive that the iron-containing particles first are mixed with at least one binder to obtain a first mixture and this first mixture subsequently is mixed with an aqueous base or with water to obtain a second mixture.

Since in the process no reducing agent is incorporated in the granules, the process according to the invention is suitable for granulating iron-containing particles in which metallized iron already is present. The content of metallized iron can be more than 30 wt-%, preferably more than 40 wt-% and particularly preferably lie between 45 and 85 wt-%. Usually, the iron content of the partly metallized dusts ranges from 70 to 85 wt-%.

The mean particle diameter (d₅₀) of the iron-containing particles used lies between 0.01 and 0.1 mm. Preferably, the particles are < 60 µm, in particular < 40 µm, with a diameter of 20 to 30 µm being usual. A pretreatment of the particles by grinding, in particular when iron-containing particles are obtained from iron ore, is expedient above all when the particle size is very inhomogeneous.

In addition, it is possible to mix particles with fine iron-containing ore with particles in which metallized iron already is present.

Since too large an amount of binder is disadvantageous for the further processing of the iron particles, it was found to be favorable when the amount of binder in the first mixture lies between 0.01 and 5 wt-%, preferably between 0.1 and 1.5 wt-%, and particularly preferably between 0.3 and 1.2 wt-%. Thus, a sufficient strength of the granules formed can be guaranteed, without a high degree of slagging occurring during the further processing of the iron-containing granules.

As binder preferably organic binders, such as cellulose, or clay minerals can be used. When using an organic binder, the same at least in part also acts as reducing agent in the reduction process due to its high carbon content, so that after the reduction binder hardly is present in the iron particles formed. Beside the availability at low cost, the use of clay minerals as binder also is supported by the fact that incorporating a reducing agent in the individual particles themselves can lead to a product very heterogeneous in its quality. Suitable clay minerals preferably include bentonite or also organic binders such as Peridur^{®}.

In principle, however, it is possible to use any binder or binder mixture, such as alcohols, bitumen, oils, surface-active agents, starch, sulfates, glucose, molasses, tars, waxes, cement and lime.

As aqueous base, aqueous alkaline bases in the sense of aqueous solutions of alkali hydroxides are particularly useful. Due to the low purchase price, the use of sodium hydroxide solution is to be recommended in particular.

The quantity of the alkaline liquid should lie between 10 ppm and 1 wt-%, normally 20 ppm to 3000 ppm, particularly preferably 30 ppm to 1000 ppm.

The procedure can be designed particularly effective when the mixing time both for mixing the iron-containing particles with the binder and for mixing the first mixture thus produced with water or an aqueous dispersing agent is more than 10 seconds, preferably more than 20 seconds, particularly preferably more than 30 seconds and quite particularly preferably > 5 minutes, but in any case < 30 minutes. According to the invention, the granulating time lies in the same order of magnitude as the mixing time.

For a good further processing, the formed granulate particles have a size of 0.1 to 30 mm, preferably 0.2 to 20 mm. It was found particularly favorable to produce pellets with a diameter of preferably 8 to 18 mm or granulate particles with a diameter of preferably 0.3 to 2 mm.

The water content in the particles produced should be adjusted to about 5 to 30 wt-%, preferably 6 to 12 wt-%. What is decisive for the water content in particular is the amount of iron already present in metallized form, as with too high a water content the granulate particles produced otherwise would partly be reoxidized by the water.

After forming the granulate particles the same are fired and thereby hardened, wherein it was found to be favorable when the hardening temperature lies between 600 and 1500°C. For pellets with a diameter of 8 to 18 mm a firing temperature of 1200 to 1450°C is recommendable, and for granulate particles with a diameter of 0.3 to 2 mm a temperature of 650 to 1300°C was found to be particularly favorable. The preferred firing temperature lies between 750 and 1200°C, in particular between 800 and 1100°C. Furthermore, it was found that granulate particles with metallized fines require a longer firing temperature below 1000°C, in particular below 900°C.

Hardening can be carried out with usual hardening and firing methods, e.g. in a fluidized bed, a circulating fluidized bed or a rotary kiln. Hardening also can be effected in a part of the reduction apparatus or under a reducing atmosphere. It can also be operated under an inert atmosphere, for example in natural gas or nitrogen. It is likewise possible to carry out the firing operation under oxidizing conditions. In this case, the oxygen content of the gas should lie between 0.1 and 10 wt-%, preferably between 1 and 7 wt-%. The oxidizing conditions lead to a low oxidation of that iron which already is present in metallized form. Thus, it is possible to homogenize the composition of the pellets before the reduction process.

The reduction can be carried out in any reduction apparatus such as a fluidized bed, a shaft furnace, a blast furnace, a rotary kiln, a rotary-hearth furnace or an electric arc furnace (EAF). The reduction should be effected such that at least a degree of reduction of 30 %, preferably more than 50 %, particularly preferably more than 70 % and most favorably between 75 and 99 % can be achieved. The degree of reduction is obtained from a wet chemical analysis for the content of total iron (w(Feₜₒₜ)), metallic iron (w(Fe⁰)) and divalent iron (w(Fe²⁺)), from which subsequently the degree of reduction R is calculated as R=(w(Fe⁰)+1/3w(Fe²⁺))/w(Feₜₒₜ)), wherein w() determines the respective weight percentages.

Furthermore, it was found that the storage of the particles for at least one hour, preferably more than 3 hours after granulation and before firing improves the strength of the agglomerates produced.

The process according to the invention in addition allows to recirculate dusts which are obtained during hardening or during the reduction step into the mixing and/or the granulation. When these dusts are recirculated into the granulation, these dusts become parts of the particles formed there. Again, they pass through the two process steps of hardening and reduction, wherein parts possibly not reduced yet likewise are reduced in these dusts. By this process it can be prevented that valuable iron dusts cannot be supplied to the end product.

A recirculation into the mixture, in particular into the first mixing stage, in particular is expedient when the amount of dusts obtained during hardening and/or during the reduction is relatively high. This requires that the dusts themselves also are again mixed with binder, as otherwise there is a risk that the mixing ratio in the granulating stage greatly deviates from the ideal mixing ratio due to the high content of iron-containing dusts, and the particles produced there are not particularly stable. Such recirculation, independent of whether it is effected into the mixing or into the granulation, is expedient in this process in particular because the reducing agent need not be present in the particles themselves, but is supplied during the reduction step.

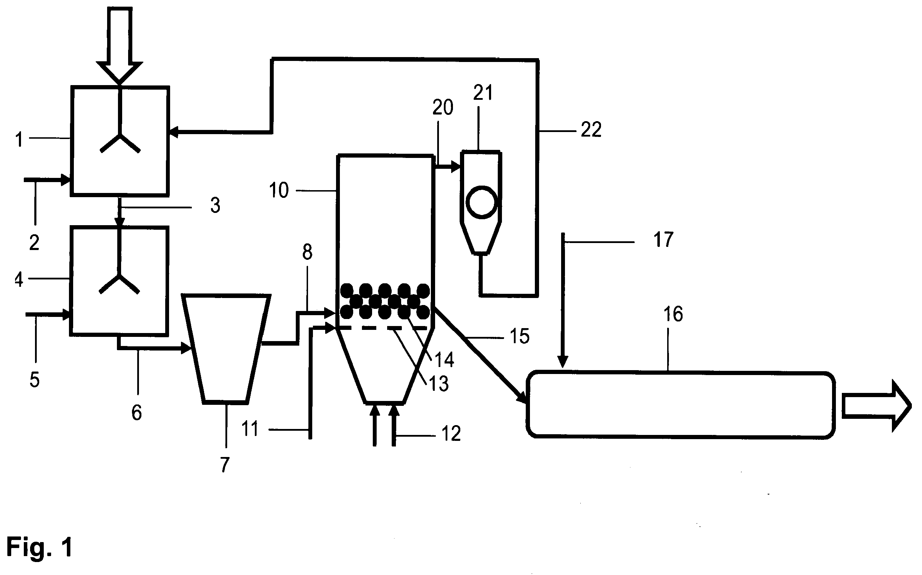

The invention will subsequently be explained in detail with reference to the drawing and exemplary embodiments. All features described and/or illustrated form the subject-matter of the invention per se or in any combination, independent of their inclusion in the claims or their back-reference.

The only Figure shows the flow diagram of a plant for carrying out the process according to the invention.

For producing iron-containing granules, iron-containing particles initially are supplied to a mixing device 1, in which they are mixed with binder, e.g. bentonite, supplied via a supply conduit 2. Via conduit 3, the material thus mixed (first mixture) is supplied to a second mixing device 4 and mixed there with water or an aqueous base, e.g. aqueous sodium hydroxide solution, which is added via a supply conduit 5 (second mixture). With a batch processing, it is of course also possible to perform the mixing of the iron-containing particles with the binder and the water or the aqueous base one after the other in a single mixing device.

Via conduit 6, the mixture thus obtained is supplied to a granulating device 7 in which granules with a diameter of 0.09 to 20 mm are formed from the mixture.

Via conduit 8, the granules then are transferred into a hardening device 10. The hardening device 10 here is designed as reactor with a circulating fluidized bed, into which fluidizing gas is introduced via conduit 12. Via conduit 11, the supply of heated gases and/or fuel is effected. From the circulating fluidized bed 14, the hardened granules are discharged via conduit 15 and transferred into a reduction apparatus, e.g. a rotary kiln 16. Via conduit 17, a reducing agent, e.g. coal, is introduced into the reduction apparatus 16. The material obtained there then can either be supplied to a temporary storage or be further processed directly.

Dusts which are obtained for example in the reactor 10 are supplied to a cyclone 21 via conduit 20. From there, the dusts can again be supplied to the mixing device 1 via conduit 22. In principle, it is also possible to at least partly feed these dusts into the mixing device 2 or into the granulating device 7. In the same way, it is also conceivable to recover dusts from the reduction apparatus 16.

### Example 1

20 kg of bentonite are added to 2 t of moist iron-containing ore with a mean particle size (d₅₀) of 25 µm. After a mixing time of about 60 s, water, e.g. conventional tap water, and about 400 ppm of NaOH (50 wt-% NaOH solution) are added within 30 s, so that the moisture content rises to about 9 wt-%. After granulating for 60 s, the obtained granulate particles with a size (d₅₀) of 700 µm can be removed from the granulating device. A part of the granulate particles is fired immediately in a fluidized bed at 1000 °C. The granulated material is firm and on separation only has a dust generation of about 7 wt-%. The agglomerates are reduced in a fluidized bed to obtain a degree of reduction of up to 95 % and only contain a dust content of about 10 wt-%.

The other part of the iron granulate particles obtained is stored for 6 h and then fired at 1000 °C. As compared to material fired immediately, this material is firmer and only about 4 wt-% of dust are generated. During the reduction, about 7 wt-% of fine dust are generated.

Iron ore particles, which are produced with the same procedure, but without the addition of sodium hydroxide, show a dust generation of up to 35 wt-% and in the reduction a dust content of 40 wt-%.

### Example 2

20 kg of bentonite are added to 1 t of moist iron-containing ore of a mean size (d₅₀) of 25 µm and 1 t of iron-containing dust with a metallization of 50 wt-% and a mean size of 50 µm. After mixing for approximately 60 s, tap water was added within 30 s, so that a moisture content of about 9 wt-% was achieved. After granulating for 60 s, the granulate particles with a size (d₅₀) of 700 µm can be removed from the granulating device. A part of the granulate particles is fired directly in a fluidized bed at 850 °C, with the oxygen content of the fluidizing gas being about 5 wt-%.

The granulated material is firm and during firing only has a dust generation of about 1 wt-%. The agglomerates are reduced in a fluidized bed to obtain a degree of reduction of 95 %, wherein here as well there only is a dust generation of about 1 wt-%.

On firing at about 1000°C, iron particles which are produced with the same procedure, but without iron-containing dust, generate about 5 wt-% of dust. In the reduction process, 5 wt-% of granulate particles are lost.

### List of Reference Numerals

- 1: mixing device
- 2, 3: conduit
- 4: mixing device
- 5, 6: conduit
- 7: granulating device
- 8: conduit
- 10: fluidized-bed reactor
- 11, 12: conduit
- 13: grate
- 14: circulating fluidized bed
- 15: conduit
- 16: rotary kiln
- 17: conduit
- 20: conduit
- 21: cyclone
- 22: conduit

## Claims

1. A process for producing hardened granules from iron-containing particles, wherein the particles are mixed with at least one binder and water or an aqueous base to obtain a mix, the mix is formed to granules, the granules are hardened and subjected to a reduction with a supplied reducing agent, wherein mixing with at least one binder and water or the aqueous base is effected such that the iron-containing particles first are mixed with at least one binder to obtain a first mixture and this first mixture then is mixed with water or an aqueous base to obtain a second mixture and in that iron-containing dusts, which are generated in the hardening and/or the reduction, are recirculated to the mixing and/or the granulation, thereby mixing the dusts again with the binder.

2. The process according to claim 1, **characterized in that** the iron-containing particles have a content of metallized iron of at least 30 wt-% and/or a mean particle diameter (d₅₀) between 0.1 and 0.01 mm.

3. The process according to any of claims 1 or 2, **characterized in that** the content of the binder in the first mixture lies between 0.01 and 5 wt-%.

4. The process according to any of the preceding claims, **characterized in that** as binder a clay mineral or an organic binder is used.

5. The process according to any of the preceding claims, **characterized in that** the aqueous base is an aqueous solution of alkali hydroxides.

6. The process according to any of the preceding claims, **characterized in that** the respective mixing time for the first and the second mixture as well as the time for forming the granules lies between 10 seconds and 30 minutes.

7. The process according to any of the preceding claims, **characterized in that** the granules have a grain size between 0.09 and 20 mm and/or a water content of 5 to 30 wt-%.

8. The process according to any of the preceding claims, **characterized in that** the temperature during hardening lies between 650 and 1500°C.

9. The process according to any of the preceding claims, **characterized in that** hardening is carried out under oxidizing or reducing conditions.

## Patentansprüche

1. Verfahren zur Herstellung von gehärteten Granalien aus eisenhaltigen Partikeln, wobei die Partikel mit wenigstens einem Binder und Wasser oder einer wässrigen Base zu einem Mischgut vermischt werden, das Mischgut zu Granalien geformt wird, die Granalien gehärtet und einer Reduktion mit einem zugeführten Reduktionsmittel unterworfen werden, wobei die Vermischung mit wenigstens einem Binder und Wasser oder der wässrigen Base so erfolgt, dass die eisenhaltigen Partikel zuerst mit wenigstens einem Binder zu einem ersten Gemisch vermischt werden und dieses erste Gemisch dann mit Wasser oder einer wässrigen Base zu einem zweiten Gemisch vermischt wird, und wobei eisenhaltige Stäube, die in der Härtung und/oder der Reduktion entstehen, zur Vermischung und/oder der Granulierung zurückgeführt werden, so dass die Stäube erneut mit dem Binder vermischt werden..

2. Verfahren nach Anspruch 1, **dadurch gekennzeichnet, dass** die eisenhaltigen Partikel einen Gehalt an metallisiertem Eisen von wenigstens 30 Gew.-% und/oder einen mittleren Partikeldurchmesser (d₅₀) zwischen 0,1 und 0,01 mm aufweisen.

3. Verfahren nach einem der Ansprüche 1 oder 2, **dadurch gekennzeichnet, dass** der Anteil des Binders in dem ersten Gemisch zwischen 0,01 bis 5 Gew.-% liegt.

4. Verfahren nach einem der vorhergehenden Ansprüche, **dadurch gekennzeichnet, dass** als Binder ein Tonmineral oder ein organischer Binder verwendet wird.

5. Verfahren nach einem der vorhergehenden Ansprüche, **dadurch gekennzeichnet, dass** die wässrige Base eine wässrige Lösung von Alkalihydroxiden ist.

6. Verfahren nach einem der vorhergehenden Ansprüche, **dadurch gekennzeichnet, dass** die jeweilige Mischzeit für das erste und zweite Gemisch sowie die Zeit für die Formung der Granalien zwischen 10 Sekunden und 30 Minuten liegt.

7. Verfahren nach einem der vorhergehenden Ansprüche, **dadurch gekennzeichnet, dass** die Granalien eine Korngröße zwischen 0,09 und 20 mm und/oder einen Wassergehalt von 5 bis 30 Gew.-% aufweisen.

8. Verfahren nach einem der vorhergehenden Ansprüche, **dadurch gekennzeichnet, dass** die Temperatur während der Härtung zwischen 650 und 1.500°C liegt.

9. Verfahren nach einem der vorhergehenden Ansprüche **dadurch gekennzeichnet, dass** die Härtung unter oxidierenden oder reduzierenden Bedingungen durchgeführt wird.

## Revendications

1. Procédé de production de granules durcis à partir de particules contenant du fer, dans lequel les particules sont mélangées avec au moins un liant et de l'eau ou une base aqueuse pour obtenir un mélange, le mélange est transformé en granules, les granules sont durcis et soumis à une réduction avec un agent de réduction ajouté, dans lequel le mélange avec au moins un liant et de l'eau ou une base aqueuse est réalisé de telle sorte que les particules contenant du fer sont en premier lieu mélangées avec au moins un liant pour obtenir un premier mélange et ce premier mélange est ensuite mélangé avec de l'eau ou une base aqueuse pour obtenir un second mélange et les poussières contenant du fer qui sont produites lors du durcissement et/ou de la réduction, sont remises en circulation dans l'étape de mélange et/ou de granulation, mélangeant ainsi de nouveau les poussières avec le liant.

2. Procédé selon la revendication 1, **caractérisé en ce que** les particules contenant du fer ont une teneur en fer métallisé d'au moins 30 % en poids et/ou un diamètre de particule moyen (d₅₀) compris entre 0,1 et 0,01 mm.

3. Procédé selon la revendication 1 ou 2, **caractérisé en ce que** la teneur en liant dans le premier mélange est comprise entre 0,01 et 5 % en poids.

4. Procédé selon l'une quelconque des revendications précédentes, **caractérisé en ce que**, comme liant, on utilise une argile minérale ou un liant organique.

5. Procédé selon l'une quelconque des revendications précédentes, **caractérisé en ce que** la base aqueuse est une solution aqueuse d'hydroxydes alcalins.

6. Procédé selon l'une quelconque des revendications précédentes, **caractérisé en ce que** le temps de mélange respectif pour le premier et le second mélange ainsi que le temps pour la formation des granules est compris entre 10 secondes et 30 minutes.

7. Procédé selon l'une quelconque des revendications précédentes, caractérisé en ce' que les granules ont une granulométrie comprise entre 0,09 et 20 mm et/ou une teneur en eau de 5 à 30 % en poids.

8. Procédé selon l'une quelconque des revendications précédentes, **caractérisé en ce que** la température pendant le durcissement est comprise entre 650 et 1500 °C.

9. Procédé selon l'une quelconque des revendications précédentes, **caractérisé en ce que** le durcissement est réalisé dans des conditions d'oxydation ou de réduction.
